# EUROPEAN PATENT SPECIFICATION

(11) **EP 1 594 657 B1**
(45) Date of publication and mention of the grant of the patent: **14.03.2007**
(21) Application number: 04703458.2
(22) Date of filing: 20.01.2004
(51) Int. Cl.: B24B 53/00, B23Q 15/007, B24B 49/16, B23Q 1/34, B23Q 17/22

(54) **GRINDING MACHINE**
SCHLEIFMASCHINE
RECTIFIEUSE

(30) Priority: 07.02.2003 EP 03100260
(43) Date of publication of application: 16.11.2005
(73) Proprietor: Koninklijke Philips Electronics N.V., 5621 BA Eindhoven (NL)
(72) Inventor: KNAAPEN, Raymond, J., W., NL-5656 AA Eindhoven (NL); DONA, Marinus, J., J., NL-5656 AA Eindhoven (NL); KRASTEV, Krassimir, T., NL-5656 AA Eindhoven (NL); VIJFVINKEL, Jakob, NL-5656 AA Eindhoven (NL); VAN RENS, Piet, C., J., NL-5656 AA Eindhoven (NL)
(74) Representative: van der Veer, Johannis Leendert
(86) International application number: PCT/IB2004/050041
(87) International publication number: WO 2004/069478

(56) References cited:
- EP-A- 0 393 615
- WO-A-89/06589
- DE-A1- 3 708 412
- US-A- 5 567 199
- PATENT ABSTRACTS OF JAPAN vol. 016, no. 026 (M-1202), 22 January 1992 (1992-01-22) -& JP 03 239471 A (MATSUSHITA ELECTRIC WORKS LTD), 25 October 1991 (1991-10-25)
- PATENT ABSTRACTS OF JAPAN vol. 016, no. 405 (M-1301), 26 August 1992 (1992-08-26) -& JP 04 135174 A (NEC CORP), 8 May 1992 (1992-05-08)
- PATENT ABSTRACTS OF JAPAN vol. 018, no. 065 (M-1554), 3 February 1994 (1994-02-03) & JP 05 285830 A (SEIKO EPSON CORP), 2 November 1993 (1993-11-02)
- PATENT ABSTRACTS OF JAPAN vol. 018, no. 065 (M-1554), 3 February 1994 (1994-02-03) -& JP 05 285831 A (OKUMA MACH WORKS LTD), 2 November 1993 (1993-11-02)
- PATENT ABSTRACTS OF JAPAN vol. 1995, no. 09, 31 October 1995 (1995-10-31) -& JP 07 164286 A (SEIKO SEIKI CO LTD), 27 June 1995 (1995-06-27)

## Description

The present invention relates to methods and apparatus as per the preamble of claims 1, 6, 14 and 19.

Examples of such methods and apparatuses are disclosed by JP 10 044 036 A.

Such a dressing process is known, and may be performed on one portion of the grinding surface, whereas at the same time, another portion of the grinding surface performs a grinding operation on a workpiece. The situation in which the grinding surface is dressed on the one hand while performing a grinding operation on the other hand is often referred to as ELID, wherein ELID stands for ElectroLytic In-process Dressing or ElectroLytic Inline Dressing.

An important advantage of the ELID-grinding process is that the obtained quality of the treated workpiece surfaces is relatively very high. The roughness of such surfaces can be less than 2 nm. Final treatment of the workpiece surfaces is not necessary, whereby time and money is saved. A further advantage is that the sub-surface damage is zero, wherein sub-surface damage is defmed as damage just below the surface of the workpiece. As an advantageous result, the surface as well as an area just below the surface is free from tensions.

During the dressing process, the electrode gets contaminated, which influences the performance of the ELID-process in a negative way. This problem is solved by regularly cleaning of the electrode, wherein the grinding process needs to be interrupted. As the cleaning process needs to be performed very often, for example every five minutes, this is not a convenient solution, and it is therefore an objective of the present invention to provide a better solution.

The objective is achieved by means of dressing methods and apparatuses having the features of claim 1, 6, 14 and 19.

Due to the movement of the electrode with respect to the dressing area, the electrode is continuously cleaned. The flow of electrolyte also plays a role in the cleaning process. As an advantageous result of the continuous cleaning process, is not necessary to interrupt the grinding process in order to clean the electrode. Further, the quality of the dressing process remains at a high level, as the dressing process is always performed by cleaned portions of the electrode.

Additionally, as the electrode moves with respect to the dressing area, it is possible to use a brush or the like to remove the contamination from portions of the electrode surface temporarily not being involved in the dressing process.

The present invention will now be explained in greater detail with reference to the figures, in which similar parts are indicated by the same reference signs, and in which:
Fig. 1 diagrammatically shows components of an ELID-grinding machine, as well as a workpiece;
Fig. 2 diagrammatically shows a grinding tool and a dressing tool of the ELID-grinding machine as well as the workpiece as shown in Fig. 1;
Fig. 3 diagrammatically shows an under view of a grinding tool and a dressing tool;
Figs. 4 and 5 illustrate a method for controlling the movement of a slide for supporting a workpiece and for positioning the workpiece with respect to a grinding tool;
Fig. 6 diagrammatically shows a machine frame, a grinding tool and a workpiece;
Fig. 7 illustrates a method for limiting forces during a grinding process;
Fig. 8 diagrammatically shows a control circuit for limiting forces during a grinding process;
Figs. 9 and 10 illustrate ways of supporting a movable slide for supporting a workpiece on a fixed base;
Fig. 11 diagrammatically shows a grinding tool and a dressing tool; and
Fig. 12 diagrammatically shows a grinding tool and two dressing tools, as well as a final product.

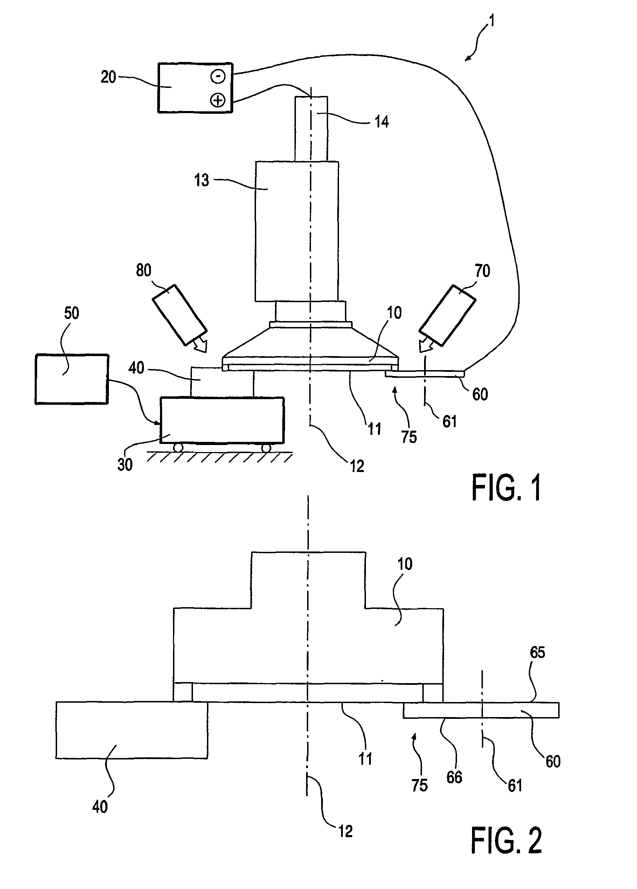

Figs. 1 and 2 show components of an ELID-grinding machine 1. In the shown example, the ELID-grinding machine 1 comprises a cup wheel 10, that is a disc-shaped grinding tool having an annular grinding surface 11. The grinding surface 11 comprises abrasive grains for actually cutting a surface which needs to be processed, and bonding agent embedding said abrasive grains. The cup wheel 10 is rotatable about a rotation axis 12, and is arranged at one end of a driven grinding spindle 13. Through the grinding spindle 13 and a carbon brush 14, the cup wheel 10 is connected to a positive pole of a pulse generator 20.

A movable slide 30 is provided for supporting a workpiece 40 and for positioning the workpiece 40 with respect to the cup wheel 10. During a grinding process, the position of the slide 30 with respect to the cup wheel 10 is controlled by means of controlling means 50.

For the purpose of dressing the grinding surface 11, a disc-shaped electrode 60 having a flat upper surface 65, a flat under surface 66 and a circular circumference is provided. The electrode 60 is rotatably arranged, wherein a rotation axis 61 of the electrode 60 extends perpendicular to the flat surfaces 65, 66 of the electrode 60. The electrode 60 is connected to a negative pole of the pulse generator 20. Further, the electrode 60 is positioned in the vicinity of the grinding surface 11, such that a relatively small gap between the electrode 60 and the grinding surface 11 exists. The ELID-grinding machine 1 comprises feed means 70 for feeding electrolyte to the small gap.

In order to obtain an effective dressing process, the electrode 60 is positioned with respect to the grinding surface 11 in such a way that a portion of the electrode 60 overlaps a portion of the grinding surface 11, seen in the direction in which the rotation axis 61 of the electrode 60 extends. Naturally, the dressing process can only take place in a portion of this overlap area in which the relatively small gap is present between the electrode 60 and the grinding surface 11. The portion where the dressing process can actually take place is referred to as dressing area 75. In case the grinding surface 11 is annular, like the shown grinding surface 11 of the cup wheel 10, the dressing area 75 is shaped as a ring segment, seen in the said direction in which the rotation axis 61 of the electrode 60 extends.

In the first place, the electrolyte plays a role in the dressing process, whereas in the second place, the electrolyte serves as a cooling means for cooling the area where the dressing process takes place. For the purpose of cooling the area where the grinding process takes place, the ELID-grinding machine comprises cooling means 80 for feeding cooling liquid to said area.

During operation of the ELID-grinding machine 1, the entirety of grinding spindle 13 and cup wheel 10 rotates about the rotation axis 12, and the electrode 60 rotates about the rotation axis 61. In the process, the slide 30 and the workpiece 40 move with respect to the rotating cup wheel 10, in order to enable the grinding surface 11 to reach all areas of the surface of the workpiece 40 which need to be processed.

Due to the fact that the cup wheel 10 is connected to the positive pole of the pulse generator 20 and the electrode 60 is connected to the negative pole of the pulse generator 20, a potential difference exists between the cup wheel 10 and the electrode 60. Under the influence of the potential difference, electric current flows between the negative electrode 60 and the positive grinding surface 11, via the electrolyte.

As a result of the flow of electric current and the flow of electrolyte between the electrode 60 and the grinding surface 11, the grinding surface 11 is dressed. During the grinding process, cut material from the workpiece 40 contaminates the grinding surface 11, wherein this material fills up the spaces between the abrasive grains of the grinding surface 11. It will be understood that the contamination needs to be removed in order to ensure that the performance of the grinding surface 11 does not decrease in the course of time.

A contaminated portion of the grinding surface 11 is always dressed by the electrode 60 before it comes into contact with the workpiece 40 again. During the dressing process, the contamination is removed under the influence of both the flow of electric current and the flow of electrolyte. Further, the bonding agent is oxidized under the influence of the flow of electric current.

During the dressing process, the negative electrode 60 gets contaminated. This contamination also needs to be removed, in order to maintain the dressing function of the electrode 60. Therefore, according to an important aspect of the present invention, the electrode 60 is rotated about the rotation axis 61. It appears in practice that, as a result of the movement of the electrode 60 and the flow of electrolyte, the contamination is sufficiently removed from the electrode 60. In a preferred embodiment, the ELID-grinding machine comprises a brush (not shown in Figs. 1 and 2) or other suitable scraping means for removing the contamination from the electrode 60, wherein the brush is arranged outside the dressing area 75.

As the grinding surface 11 is continuously dressed, and as the grinding process does not need to be interrupted, the workpiece 40 can be continuously processed. Consequently, the processed surface will not be damaged by marks caused by stops and start-ups of the grinding process. Further, as the electrode 60 is continuously cleaned, the dressing process takes place under optimal conditions, so that the performance of the grinding surface 11 is constantly kept at a high level. As an additional result, the processing forces can be kept at a relatively low level, so that damage and sub-surface damage of the processed surface can be entirely avoided.

There is no need for further treating a surface being processed by the ELID-grinding machine 1 according to the present invention, as this ELID-grinding machine 1 offers the possibility to obtain an excellent quality of the surface, even a quality which satisfies optical requirements. Therefore, the ELID-grinding machine 1 according to the invention is pre-eminently suitable for grinding surfaces which are to be applied in the optical field.

The present invention may also be applied in a ELID-grinding machine 1 having another grinding tool than a cup wheel 10. Further, the electrode 60 does not necessarily need to be disc-shaped or to have a circular circumference. It is important that the electrode 60 is movably arranged, such that the electrode 60 is movable with respect to the dressing area 75, and that the shape of the electrode 60 is such that the electrode 60 is able to dress the grinding tool properly.

During the dressing process as described in the foregoing, an electrolytic process takes place. In the process, a certain amount of gas is produced, especially when a water-based electrolyte is applied. The produced gas can not easily escape, due to the fact that the gap between the electrode 60 and the grinding surface 11 is relatively small and that the direction of the flow of electrolyte entering the gap is opposite to the direction in which the gas may escape from the gap. The amount of gas can be so large, that a substantial portion of the dressing area 75 is occupied by the gas. In this way, the electrolytic process is disturbed, and the dressing process is deteriorated, which has a negative effect on the quality of the surface processed by the grinding surface 11.

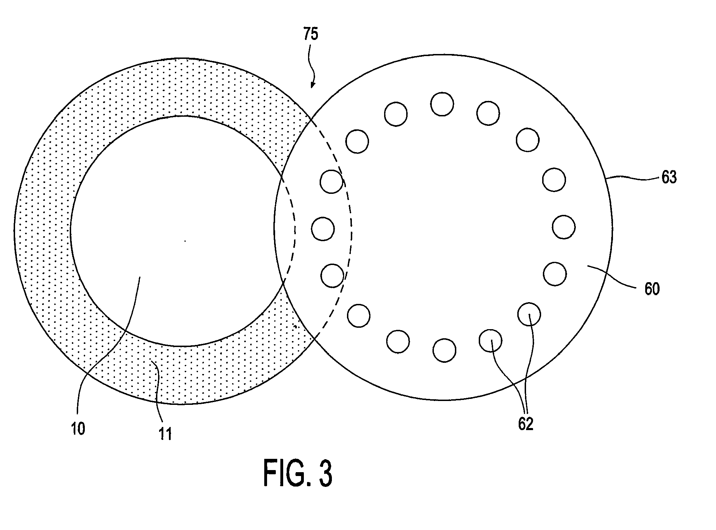

In order to solve the problems caused by the gas production, the present invention proposes an electrode 60 having holes 62, as shown in Fig. 3. The holes 62 may be arranged according to any suitable pattern. In the shown example, the holes 62 are arranged in a circle at a distance from the circumference 63 of the electrode 60, wherein the holes 62 are evenly divided over the circle. However, the holes 62 may be positioned in a different fashion. It is important that the holes 62 are arranged such that on rotation of the electrode 60, one side of the holes 62 regularly ends up in the gap between the electrode 60 and the grinding surface 11. Preferably, the shape of the cross section of the holes 62 is circular, which does not imply that the holes 62 can not be shaped in a different manner.

For the purpose of a dressing process, electrolyte is fed to the dressing area 75, through the holes 62.

During the electrolytic process, produced gas can escape through the gap between the electrode 60 and the grinding surface 11, as the flow of gas is not hindered by an opposite flow of electrolyte. Consequently, the gas will not have a deteriorating effect on the dressing process.

In principle, it is also possible that the position and direction of the flow of electrolyte are not adjusted, compared to a situation in which an electrode 60 without holes 62 is utilized. In such case, the produced gas can escape through the holes 62.

The electrode 60 having holes 62 may also be advantageously applied in a conventional situation, that is a situation in which the electrode 60 is not rotated during the dressing process.

The accuracy of the obtained geometry of the workpiece 40 is related to the accuracy of the movement of the slide 30 during the ELID-grinding process. This is not only true for the ELID-grinding process, but for all processes in which a workpiece 40 is supported by a movable slide 30, for example conventional grinding processes in which grinding of a workpiece 40 and dressing of a grinding tool do not simultaneously take place, turning processes or milling processes.

According to the state of the art, if a relatively high accuracy of the geometry of a final product is required, the product is measured after having been processed in a grinding machine, and corrected when necessary. This is a bothersome and time-consuming process.

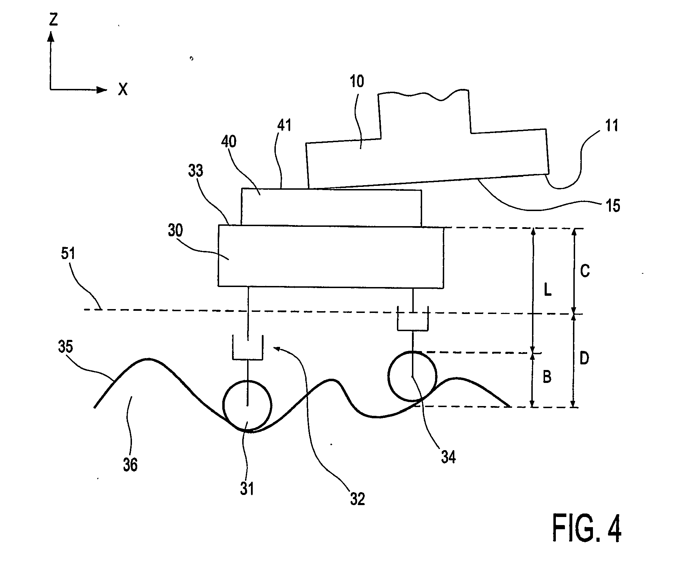

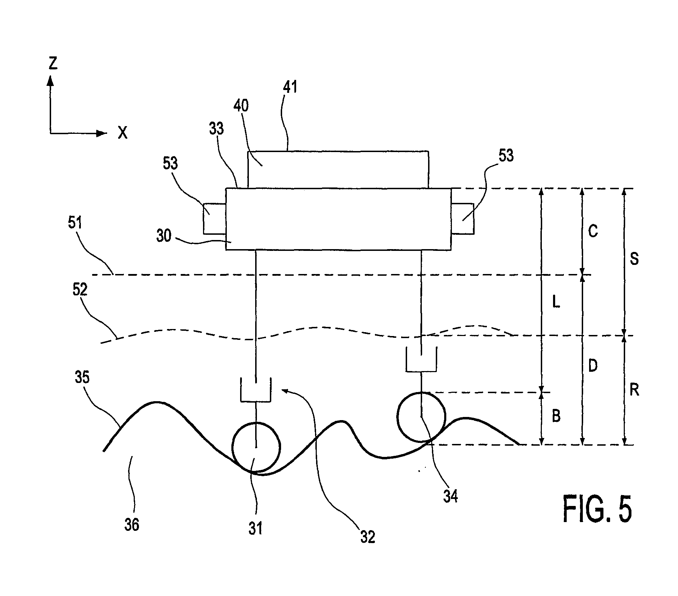

As a solution to the problem as described in the preceding paragraph, the present invention proposes a way of accurately controlling the movement of the slide 30, which will be explained in the following, with reference to Figs. 4 and 5.

Figs. 4 and 5 diagrammatically show the slide 30 and the workpiece 40. In Fig. 4, the cup wheel 10 is also diagrammatically shown. Fig. 4 clearly illustrates a conventional way of positioning the cup wheel 10 with respect to the surface 41 of the workpiece 40 which is processed by the grinding surface 11 of the cup wheel 10. An end surface 15 of the cup wheel 10 and the surface 41 of the workpiece 40 which is processed do not extend parallel to each other. Instead, a small angle is present between said surfaces 15, 41. The reason for this will be readily understood: in such a position of the cup wheel 10 with respect to the workpiece 40, grinding of portions of the workpiece 40 which have already been processed is avoided, and only a relatively small portion of the grinding surface 11 participates in the grinding process. In other words, by means of the skew positioning of the cup wheel 10, it is ensured that a portion of the surface 41 of the workpiece 40 which has already been processed is not contacted by the grinding surface 11 of the cup wheel 10 again.

The slide 30 slides over a supporting surface 35, which is for example an upper surface of a base 36 of granite or another suitable material. The supporting surface 35 is not exactly flat, as is diagrammatically shown in Figs. 4 and 5, in an exaggerated manner. In a preferred embodiment, the slide 30 is supported by air bearings 31. In Figs. 4 and 5, the air bearings 31 are diagrammatically depicted as rotatable balls. The slide 30 and the air bearings 31 are connected via actuators 32. During a movement of the slide 30, the air bearings 31 move across the supporting surface 35.

The actuators 32 are adjustable, so that a distance between the slide 30 and the air bearings 31 may be varied. The actuators 32 are controlled by the controlling means 50 in such a way, that the unevenness of the supporting surface 35 as well as the influence of the grinding force acting on the workpiece 40 during the grinding process is completely compensated for, so that the slide 30 moves according to a straight plane.

For the purpose of a relatively simple controlling method according to the present invention, which is illustrated by means of Fig. 4, results of a measurement of the unevenness of the supporting surface 35 with respect to a virtual reference plane 51 are stored in the controlling means 50.

In the following, mutually perpendicular directions in which the virtual reference plane 51 extends are referred to as x-direction and y-direction. Further, a z-direction is defined as a direction extending perpendicular to both the x-direction and the y-direction. In Figs. 4 and 5, the x-direction and z-direction are diagrammatically depicted by means of a set of arrows x and z.

On the basis of the above-mentioned measuring results, the controlling means 50 are able to determine the required distance between the slide 30 and the air bearings 31 for every possible combination of x-position and y-position of the slide 30 and the air bearings 31.

During a grinding process, all aspects of the movement of the slide 30 are controlled by the controlling means 50. In the process, it is important that information regarding the x-position and the y-position of the slide 30, more specifically of the air bearings 31, is supplied to the controlling means 50, in order for the controlling means 50 to be able to control the z-position of the slide 30 in a proper way. In principle, the information regarding the x-position and the y-position of the slide 30 may be obtained with or without feedback. Obtaining the information without feedback means that the information is simply based on the assumption that the x-position and the y-position of the slide 30 correspond to the x-position and y-position as dictated by the controlling means 50. Obtaining information with feedback is more complex, as this means that detectors or the like are provided for detecting the actual x-position and y-position of the slide 30, and for transmitting information regarding these positions of the slide 30 to the controlling means 50. In the controlling means 50, the information regarding the actual x-position and y-position is compared to the information regarding the dictated x-position and y-position. In case of a difference, the controlling means 50 controls the movement of the slide 30 until the detected actual x-position and y-position correspond to the dictated x-position and y-position. It will be understood that obtaining information regarding the x-position and y-position with feedback offers more security, and is therefore preferred in practice.

As soon as the controlling means 50 obtain information regarding the x-position and the y-position of the slide 30, the controlling means are able to determine the required distance between the slide 30 and each of the air bearings 31, on the basis of stored differences between the supporting surface 35 and the virtual reference plane 51 for all possible x-positions and y-positions.

A simple algorithm which may be applied by the controlling means 50 for determining the required distance between an upper surface 33 of the slide 30 and an air bearing 31 for a given x-position and y-position of the air bearing 31 is described in the following. For the purpose of simplification of the description, the following definitions are utilized:
- distance D =: measured variable distance between the virtual reference plane 51 and the supporting surface 35
- distance C =: required constant distance between the upper surface 33 of the slide 30 and the virtual reference plane 51
- distance B =: length of the air bearing 31 in the z-direction
- distance L =: required variable distance between the upper surface 33 of the slide 30 and the air bearing 31

On the basis of the information regarding the x-position and the y-position of the air bearing 31, the distance D is known from the stored measuring results. As the distances C and B are constant distances, the processing means 50 are able to find the distance L by means of the following relation: L = D + C - B.

When the slide 30 is moved in the x-direction and/or the y-direction, the required change in length of an actuator 32 arranged between the slide 30 and the air bearing 31 is determined on the basis of a comparison between the distance L in the first position of the slide 30 and the distance L in the second position of the slide 30. When the air bearing 31 is moved from a top of the supporting surface 35 to a valley of the supporting surface 35, the length of the actuator 32 must increase, in other words, the actuator 32 must extract, in order to maintain the required constant distance C. Conversely, when the air bearing 31 is moved from a valley of the supporting surface 35 to a top of the supporting surface 35, the length of the actuator 32 must decrease, in other words, the actuator 32 must retract.

In a more complex controlling method, which is illustrated by means of Fig. 5, an actual reference plane 52 is utilized on top of the virtual reference plane 51. In this way, feedback about the actual position of the slide 30 can be given to the controlling means 50 in the form of a measured distance between the slide 30 and the actual reference plane 52, and additional loads which are exerted on the slide 30 during the grinding process are compensated for.

Contrary to the virtual reference plane 51, the actual reference plane 52 is embodied by at least one actual component of the grinding machine. The grinding machine may for example comprise three invar straightedges, in order to enable measurements during which five degrees of freedom are determined. Naturally, the actual reference plane 52 is not exactly flat, as is diagrammatically shown in Fig. 5, in an exaggerated manner.

During a movement of the slide 30, a distance S between the upper surface 33 of the slide 30 and the actual reference plane 52 is determined by means of a sensor 53. The value of the distance S is used by the controlling means 50 to determine the required momentary changes of length of the actuator 32, such that the upper surface 33 of the slide 30 can move according to a straight plane.

For the purpose of storing information regarding distance D and information regarding a distance R between the actual reference plane 52 and the supporting surface 35, initial measurements are performed while the slide 30 is moved in an unloaded state, wherein the lengths of the actuators 32 are fixed. In this way, the unevenness of the supporting surface 35 with respect to the virtual reference plane 51 (distance D) is determined and stored in the controlling means 50. Further, a signal from the sensor 53 is determined and stored in the controlling means.

As already mentioned, the signal of the sensor 53 is representative of the distance S. During the initial measurements, the path of the upper surface 33 of the slide 30 corresponds to the path of the supporting surface 35. As a result, the stored signal of the sensor 53 is representative of the distance R.

As soon as the controlling means 50 obtain information regarding the x-position and the y-position of the slide 30, the controlling means 50 are able to determine the required distance between the slide 30 and each of the air bearings 31, on the basis of the stored information obtained by means of the initial measurements.

An algorithm including a feedback which may be applied by the controlling means 50 for determining the distance L for a given x-position and y-position of the air bearing 31 is described in the following.

On the basis of the information regarding the x-position and the y-position of the air bearing 31, the distance D is known from the stored initial measuring results. As the distances C and B are constant distances, the distance L can be found by means of the following relation: L = D + C - B.

The controlling means 50 must control the actuator 32 such as to bring the distance L to the determined value. In the process, additional loads on the actuator 32 must be accounted for. During the grinding process, such additional loads are present as a result of the grinding forces. Consequently, the actuator 32 is biased such that a set distance L would be too small if the additional loads would not be compensated for by the controlling means 50. Therefore, it is important to perform feedback on the basis of information provided by the sensor 53. For this reason, the algorithm comprises a step in which this information is utilized.

For every possible x-position and y-position of the air bearing 31, the controlling means 50 are able to determine a required distance S by means of the following relation: S = D + C - R. On the basis of a signal of the sensor 53, the controlling means 50 are able to determine an actual value of the distance S, and to check whether the actual value equals the required value. As soon as the controlling means 50 find a difference between the required value and the actual value, a signal is transmitted to the actuator 32 in order to bring the difference to zero. As long as the difference is kept zero, the upper surface 33 of the slide 30 moves according to a straight plane. As already remarked in the foregoing, such a movement contributes to the accuracy of the obtained geometry of a workpiece 40 supported by the slide 30.

It will be clear from the foregoing, that during a movement of the slide 30 over the supporting surface 35, the controlling means 50 continuously compare the actual distance S as sensed by the sensor 53 to the required distance S. As the controlling means 50 control the actuator 32 such that the actual distance S always equals the required distance S in order to move the upper surface 33 of the slide 30 according to a straight plane, it may be stated that during a such a movement of the slide, the sensor 53 in fact exactly observes the shape of the actual reference plane 52.

When the controlling method as described in the foregoing is applied in order to control the z-position of the slide 30, the unevenness of the supporting surface 35 is compensated for. However, a possible skewness of the supporting surface 35 results in a skew movement of the slide 30, as the controlling method does not comprise any steps for accounting for such a divergence. Still, the slide 30 moves according to a flat plane. An advantage of allowing the skew movement is that the correction which must be carried out by the actuators 32 is not as large as it would be in a situation in which the movement should not only be in a flat plane, but should also be exactly straight.

Preferably, air bearings 31 are utilized to support the slide 30 and to slide over the supporting surface 35. Nevertheless, other suitable means may be utilized for fulfilling these tasks.

Dependent on the desired geometry of the final product, the distance between the upper surface 33 of the slide 30 and the virtual reference plane 51 does not necessarily need to be a constant. When a processed surface 41 does not need to be completely flat, the algorithm which is followed by the controlling means 50 when controlling the position of the slide 30 may comprise an additional step, during which the value of the distance between the upper surface 33 of the slide 30 and the virtual reference plane 51 is determined on the basis of information regarding the x-position and the y-position of the slide 30. It will be understood that this is only possible if information regarding a relation between the value of the distance between the upper surface 33 of the slide 30 and the virtual reference plane 51 on the one hand and the x-position and y-position of the slide 30 on the other hand is available to the controlling means 50.

Theoretically, during the grinding process, it is possible that the workpiece 40 is kept at a certain position, whereas the grinding tool moves with respect to the workpiece 40. The controlling method as described in the foregoing may then be applied in order to control the position of the grinding tool.

The controlling method is suitable for accurately controlling the position of a slide 30 or a tool, regardless of the kind of process in which the slide 30 and the tool are applied. The process may be an ELID-grinding process or any other grinding process, but may also be a turning process or a milling process, for example.

In the foregoing, it is remarked that the accuracy of the obtained geometry of the workpiece 40 is related to the accuracy of the movement of the slide 30 during a process in which a workpiece 40 is supported by a movable slide 30. Another important factor which influences the accuracy of the obtained geometry of the workpiece 40 is stiffness of the machine in which the workpiece 40 is processed, for example the ELID-grinding machine 1 according to the present invention.

Ideally, the position of the workpiece 40 should be independent of the position of the tool. In other words, when the tool contacts the workpiece 40 and cuts the workpiece 40, the workpiece 40 should not evade or deflect under the influence of machining forces which are involved in the process. Therefore, a total stiffness of the machine frame should be as high as possible.

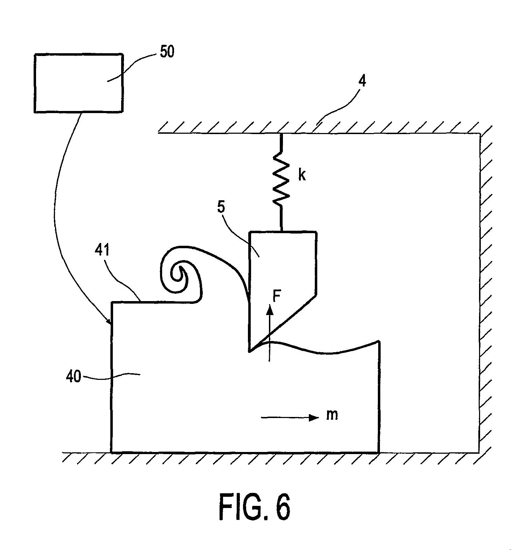

Fig. 6 diagrammatically shows a grinding machine frame 4, a workpiece 40, and a grinding tool 5 cutting the workpiece 40. A movement of the workpiece 40 with respect to the grinding tool 5 is indicated by means of an arrow m, whereas a grinding force acting between the grinding tool 5 and the workpiece 40 as a result of the cutting process is indicated by means of an arrow F. A total frame stiffness k is diagrammatically depicted by means of a zigzag line.

In order to control the position of the workpiece 40, controlling means 50 are provided. During the grinding process, the controlling means 50 determine the depth of cut by dictating the position of the workpiece 40 with respect to the grinding tool 5. In case of the total frame stiffness k being relatively high, the grinding force F can easily become relatively very high, due to small changes in the grinding process which may for example occur when the grinding tool 5 meets relatively high obstacles on the surface 41 of the workpiece 40 being processed. In the process, the grinding force F can become too high, such that the grinding process deteriorates. In extreme cases, the grinding tool 5, the grinding machine and/or the workpiece 40 can get seriously damaged.

A method for controlling the position of the workpiece 40 is disclosed, wherein measures are taken to limit the grinding force F, so that deterioration of the grinding process and damage of the grinding tool 5, the grinding machine and/or the workpiece 40 are prohibited.

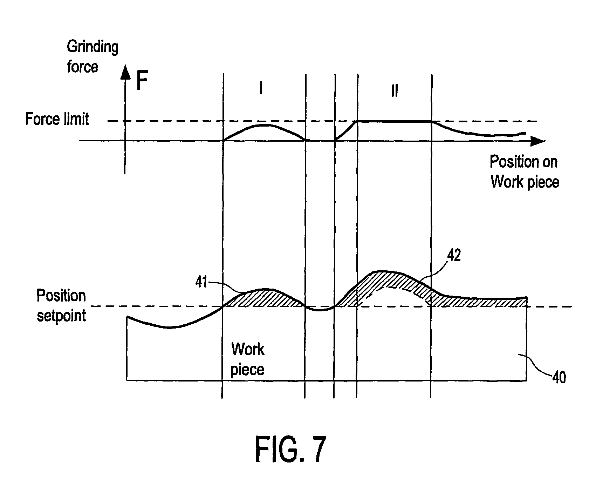

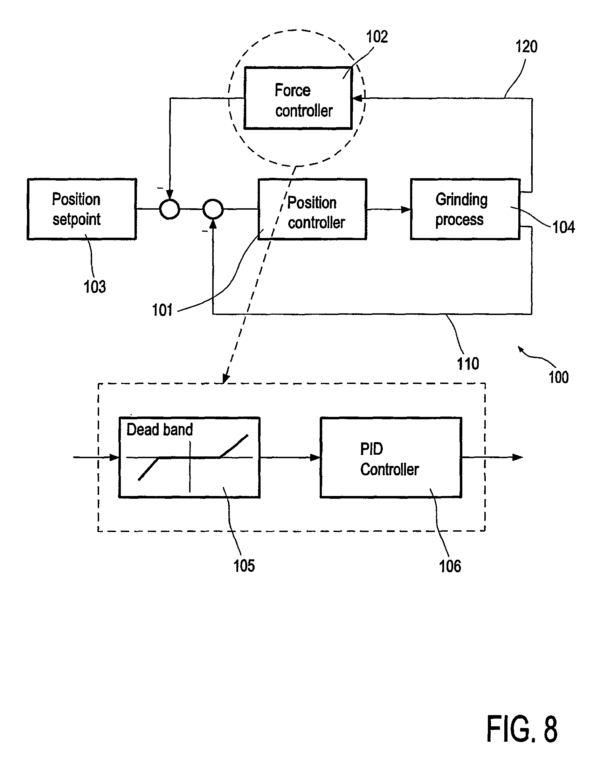

The method for controlling the position of the workpiece 40 will be explained with reference to Figs. 7 and 8.

The grinding machine is provided with a force limiter, in which a force limit is laid down. In the upper portion of Fig. 7, in which a graph illustrating the relation between the grinding force F and a position of the grinding tool 5 on an arbitrary surface 41 of the workpiece 40 is shown, the force limit is indicated by means of a dashed line.

As long as the grinding force F is lower than the force limit, the position of the workpiece 40 with respect to the grinding tool 5 is controlled by the controlling means 50 in such a way that the grinding tool 5 is able to remove all material from the workpiece 40 which extends beyond a position setpoint. In the under portion of Fig. 7, in which a detail of the surface 41 of the workpiece 40 is shown, the position setpoint is indicated by means of a dashed line. Normally, the position setpoint is closely related to the required depth of cut. In the following, the position of the workpiece 40 with respect to the grinding tool 5 in which the grinding tool 5 is able to remove all material which extends beyond the position setpoint is referred to as effective workpiece position.

As soon as the grinding force F has to exceed the force limit in order for the workpiece 40 to reach the effective workpiece position, the controlling means 50 do not any longer control the position of the workpiece 40 on the basis of information regarding the position setpoint. Instead, in such a situation, the controlling means 50 control the position of the workpiece 40 on the basis of information regarding the force limit, such that the value of the grinding force F stays on the level of the value of the force limit.

Obviously, when the grinding force F is kept at the force limit, the workpiece 40 is not able to reach the effective workpiece position. Instead, the workpiece 40 is positioned further away from the grinding tool 5, as a result of which the grinding tool 5 is only able to remove a top portion of the material extending beyond the position setpoint, whereas a bottom portion of said material is ignored.

In Fig. 7, the material of the workpiece 40 which is removed during one grinding pass is depicted in a hatched manner, and is indicated by means of reference numeral 42. It can clearly be derived from Fig. 7 that in a situation in which the grinding force F remains below the force limit, all material extending beyond the position setpoint is removed, and that in a situation in which the grinding force F is limited, just a top portion of the material extending beyond the position setpoint is removed. It will be understood that in order to remove all material extending beyond the position setpoint, one or more additional grinding passes are needed, in which the grinding tool 5 moves over the surface 41 of the workpiece 40 again, until the grinding force F does not exceed the force limit any more.

In a practical situation, only the position of the workpiece 40 is varied with respect to the grinding tool 5, whereas the grinding tool 5 itself is not displaced. Preventing the grinding force F from exceeding the force limit can be done by controlling the position of the workpiece 40 such that the stiffness from the grinding tool 5 to the machine frame 4 is virtually decreased, in other words, such that the suspension of the grinding tool 5 virtually becomes resilient. This effect can be obtained in several practical ways, either mechanically or electrically. For example, when the position of the workpiece 40 is controlled with a servo system comprising a position controller, a force controller that acts upon the position controller may be provided. In that way, if the grinding force F exceeds the force limit, the force controller changes the setpoint of the position controller such that the grinding force F will not further exceed the force limit. In other words, as long as the grinding force F remains below the force limit, position control is applied, and as soon as the grinding force F exceeds the force limit, the grinding machine reverts to force control.

In Fig. 8, a control circuit 100 is shown, which may be implemented in the grinding machine in order to carry out the above-described method of controlling the position of the workpiece 40. The position controller is indicated by means of reference numeral 101, and the force controller is indicated by means of reference numeral 102. According to an important aspect, the control circuit 100 comprises a position control loop 110 as well as a force control loop 120.

During operation of the control circuit 100, information regarding a position setpoint 103 is transmitted to the position controller 101. On the basis of said information, the position controller 101 influences the grinding process 104 by setting the position of the workpiece 40 with respect to the grinding tool 5. In the process, the control circuit 100 continuously checks the actual position of the workpiece 40 with respect to the grinding tool 5 as well as the grinding force F. Information regarding the actual position of the workpiece 40 with respect to the grinding tool 5 is transmitted to the position controller 101 through the position control loop 110. If necessary, the position controller 101 adjusts the position of the workpiece 40 with respect to the grinding tool 5 on the basis of the received information of the position setpoint on the one hand and the actual position of the workpiece 40 with respect to the grinding tool 5 on the other hand. Information regarding the grinding force F is transmitted to the force controller 102, which is part of the force control loop 120.

The force controller 102 comprises an interpreter 105 and a PID controller 106. In the interpreter 105, a relation between a correction value and the value of the grinding force F is stored. Said relation contains a so-called dead band, which means that the correction value is zero for a certain range of grinding forces F. In the shown example, the relation is such that the dead band is associated with grinding forces F below the force limit.

In the interpreter 105, the correction value is determined on the basis of the information regarding the grinding force F. If the grinding force F is below the force limit, then the correction value is zero, as a result of which the input to the position controller 101 is not influenced by the force control loop 120. However, if the grinding force F exceeds the force limit, then a correction value is found and transmitted to the PID controller 106. On the basis of the correction value, the PID controller 106 adjusts the position setpoint, thereby causing an adjustment of the position of the workpiece 40 with respect to the grinding tool 5 by the position control loop 110. The adjustment of the position setpoint is such that the workpiece 40 is brought at a position in which the value of the grinding force F corresponds to the value of the force limit.

It will be understood that instead of the shown control circuit 100, other control circuits are possible within the scope of the present invention. For example, another controller can be applied instead of the shown PID controller 106. Instead of adjusting the position setpoint on the basis of a correction value, the grinding force F may simply be limited. In a possible embodiment, the actuators 32 extending between the slide 30 supporting the workpiece 40 and the supporting surface 35 may be limited, whereby the grinding force F may be limited.

Further, it will be understood that the method of limiting machining forces by switching from position control to force control when the machining force gets too high is applicable in many processes. In principle, the method may be carried out in the context of every process in which a workpiece 40 is subjected to a cutting treatment by a cutting tool, which is the case in a turning process or a milling process, for example.

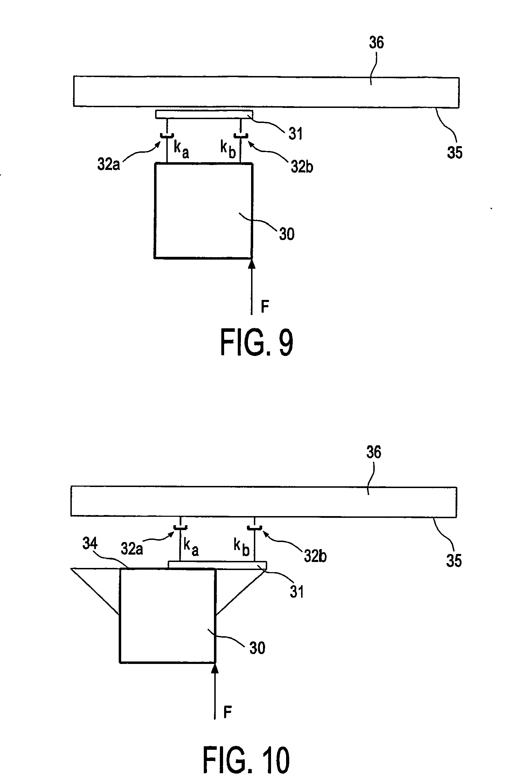

In the following, two different ways of supporting the slide 30 for supporting and positioning the workpiece 40 on the base 36 are described with reference to Figs. 9 and 10.

The arrangement as shown in Fig. 9 corresponds to the arrangement as diagrammatically shown in Figs. 4 and 5. The slide 30 is supported on the supporting surface 35 of the base 36 by means of an air bearing 31, wherein the slide 30 is connected to the air bearing 31 through actuators 32. Each actuator 32 represents a stiffness k. In Figs. 9 and 10, two actuators 32a, 32b are shown, wherein the stiffness represented by one of the actuators 32a, 32b is referred to as kₐ, and wherein the stiffness represented by the other of the actuators 32a, 32b is referred to as k_{b}.

During the grinding process, the slide 30 is subjected to a grinding force F. An angular displacement of the slide 30, which would be caused by any grinding force F not acting on the center of the slide 30 if no measures were taken, is prevented by ensuring that the translations of the actuators 32a, 32b always correspond to each other. As the slide 30 is only supported at a certain number of positions, namely the positions where the actuators 32 are connected to the slide 30, the way in which the slide 30 experiences the grinding force F on the one hand and the stiffness kₐ and k_{b} on the other hand is different for different points of action of the grinding force F on the slide 30. For example, if the grinding force F acts on the slide 30 near the circumference of the slide 30, then only one of the stiffness kₐ and k_{b} acts against the grinding force F. In the example as shown in Fig. 9, only stiffness k_{b} compensates for the grinding force F. However, in a different situation, for example a situation in which the point of action is at the center of the slide 30, both stiffness kₐ and k_{b} act against the grinding force F. It will be understood that in the last situation, the support of the slide 30 offers more resistance to the grinding force F, and the stiffness of the support of the slide 30 is larger.

The variation of the stiffness of the support of the slide 30 is disadvantageous in that it affects the geometry of a surface 41 of a workpiece 40 being processed. Near the center of the slide 30, the grinding force F is larger in order to compensate for the relatively high stiffness of the actuators 32a, 32b, whereas near the circumference of the slide 30, the grinding force F is smaller in order to compensate for the relative low stiffness of the actuators 32a, 32b. As a result, more material is removed from the surface 41 of the workpiece 40 being processed at the center of said surface 41 than at the circumference of said surface 41. As a disadvantageous final result, a concave surface 41 is obtained.

The support of the slide 30 as shown in Fig. 10 offers a solution to the above-sketched problem of obtaining concave surfaces 41. According to the solution, the air bearing 31 is supported on the supporting surface 35 of the base 36 by means of the actuators 32a, 32b, wherein the slide 30 is supported on the air bearing 31. In the arrangement as shown in Fig. 9, the air bearing 31 and the slide 30 move jointly with respect to the supporting surface 35. Instead, in the arrangement as shown in Fig. 10, the slide 30 moves with respect to the air bearing 31, which is fixedly connected to the supporting surface 35 through the actuators 32. In this arrangement, the position of the slide 30 with respect to the air bearing 31 can be adjusted to the point of action of the grinding force F on the slide 30, such that the point of action is always at the same position with respect to the air bearing 31. Consequently, the stiffness of the support of the slide 30 acting against the grinding force F is a constant, so that variations of the grinding force F are avoided and completely flat processed surfaces 41 are obtained.

Preferably, the slide 30 is moved with respect to the air bearing 31 in such a way that the grinding force F is always directed towards the center point of the arrangement of the actuators 32, so that the stiffness of the support of the slide 30 is at a maximum.

In a practical embodiment, the slide 30 is broadened at the side contacting the air bearing 31, so that a bottom surface 34 of the slide 30 sliding over the air bearing 31 is enlarged.
Both the arrangements as shown in Figs. 9 and 10 may be applied for the purpose of any process in which a workpiece 40 is supported on a movable slide 30.

In the hitherto shown examples, the grinding surface 11 is flat and the electrode 60 is shaped as a disc having a flat upper surface 65 and a flat under surface 66.

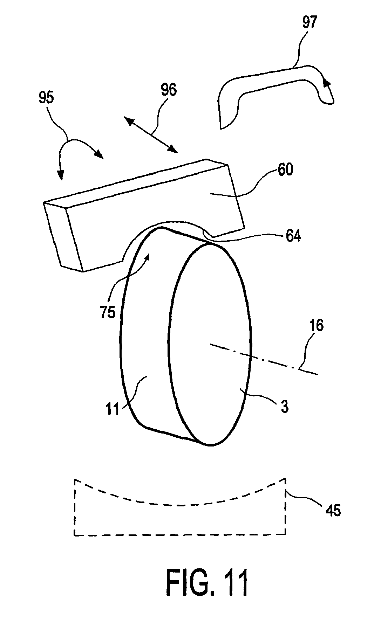

For the purpose of certain applications, the ELID-grinding machine 1 according to the present invention must be provided with a grinding tool having a curved grinding surface 11 instead of a flat grinding surface 11. An example of such a grinding tool is shown in Fig. 11.

The grinding tool 3 as shown in Fig. 11 has a convex grinding surface 11, more specifically a grinding surface 11 having a circular circumference. When the grinding tool 3 is rotated about a rotation axis 16, and a workpiece 40 is moved as well, a final product having a concave surface is obtained. The final product may for example be a concave lens. In Fig. 11, a possible circumference of the final product is outlined by means of a dashed line 45.

If a disc-shaped electrode having a flat upper surface 65, like the electrode 60 as disclosed in the foregoing, would be applied for the purpose of dressing the convex grinding surface 11, then it would not be possible to carry out the dressing process in a sufficient manner. The main reason is that only a line-shaped portion of the electrode 60 would be close enough to the grinding surface 11 in order for the electrolytic process between the electrode 60 and the grinding surface 11 to take place, in other words, the dressing area would be too small. For effectively carrying out the dressing process, the portion of the electrode 60 being in the vicinity of the grinding surface 11 should be larger. Therefore, a suitable electrode 60 for dressing a convex grinding surface 11 should have a concave dressing surface. In Fig. 11, such an electrode 60 is shown, wherein the concave surface is indicated by means of reference numeral 64. The electrode 60 is positioned such that the concave surface 64 encompasses a portion of the grinding surface 11.

Preferably, as it is important that a substantial portion of the electrode 60 can be in the vicinity of the grinding surface 11, the electrode 60 comprises a portion having a shape which resembles the shape of at least a portion of the final product which may be obtained by means of the grinding tool 3.

In order to avoid contamination of the concave surface 64 of the electrode 60 during the dressing process, the electrode 60 is moved with respect to the dressing area 75 where the dressing process actually takes place.

At first sight, it might seem an interesting option to put the electrode 60 in a reciprocating motion about the rotation axis 16 of the grinding tool 3. In Fig. 11, the reciprocating motion of the electrode 60 is diagrammatically depicted by means of curved arrows 95. However, a disadvantage of this motion of the electrode 60 is that at the points where the electrode 60 turns around, in other words, the points where the direction of the reciprocation motion with respect to the rotation axis 16 of the grinding tool 3 changes, the electrode 60 stands still for a moment. During such a standstill moment, the electrode 60 does not move with respect to the dressing area 75, and the dressing process is less effective compared to a situation in which the electrode 60 does move with respect to the dressing area 75. As a consequence, the grinding process will be influenced for a moment, whereby a mark will appear on the processed surface 41 of the workpiece 40.

In order to obtain final products having processed surfaces of an excellent quality, it is very important that the electrode 60 moves continuously with respect to the dressing area 75 during an ELID-grinding process in which processing of a surface 41 of a workpiece 40 and dressing of a grinding surface 11 of a grinding tool 3 simultaneously take place. Therefore, in case a grinding tool 3 having a curved grinding surface 11 is applied, it is not only important to apply an electrode 60 also having a curved surface 64, but it is also important to avoid standstills of the electrode 60 with respect to the dressing area 75 during the ELID-grinding process.

In the case of the convex grinding surface 11 and concave surface 64 of the electrode 60 as shown in Fig. 11, a continuous movement of the electrode 60 with respect to the dressing area 75 is obtained by adding an additional reciprocating motion to the reciprocating motion about the rotation axis 16 of the grinding tool 3, wherein the additional reciprocating motion is a substantially linear motion in the direction of said rotation axis 16. In Fig. 11, the additional linear reciprocating motion is diagrammatically indicated by means of straight arrows 96. As a result of the curved reciprocating motion about the rotation axis 16 of the grinding tool 3 and the linear reciprocating motion in the direction of said rotation axis 16, a combined movement is obtained, the course of which is diagrammatically indicated in Fig. 11 by means of a closed loop 97. The combined movement is a wobbling movement in which standstill moments do not occur.

It will be understood that there are many possible shapes of the grinding surface 11, and accordingly many possible shapes of the electrode 60. For example, the grinding surface 11 may be concave, whereas the electrode 60 may comprise a convex surface. Both the grinding surface 11 and the concave surface 64 may be circular, as is the case in the shown example, but may for example also be elliptically shaped. Further, the shapes of the grinding surface 11 and the electrode 60 may be more complex, for example doubly curved instead of singly curved as shown. In any case, it is important that the shape of the electrode 60 is adjusted to the shape of the grinding surface 11, such that an area of the electrode 60 which is positioned in the vicinity of the grinding surface 11 is sufficiently large for the dressing process to take place in an effective way, in other words, such that the dressing area 75 is large enough. Further, regardless of the shapes of the grinding surface 11 and the electrode 60, it is important to arrange the electrode 60 such that it is able to perform a continuous movement with respect to the dressing area 75, so that during a dressing process, a standstill of the electrode 60 with respect to the dressing area will never occur.

Machining time is an important factor in grinding processes. Therefore, in a case of workpieces having two or more surfaces which need to be subjected to a grinding process, simultaneous processing instead of successive processing of the surfaces would be a profitable option.

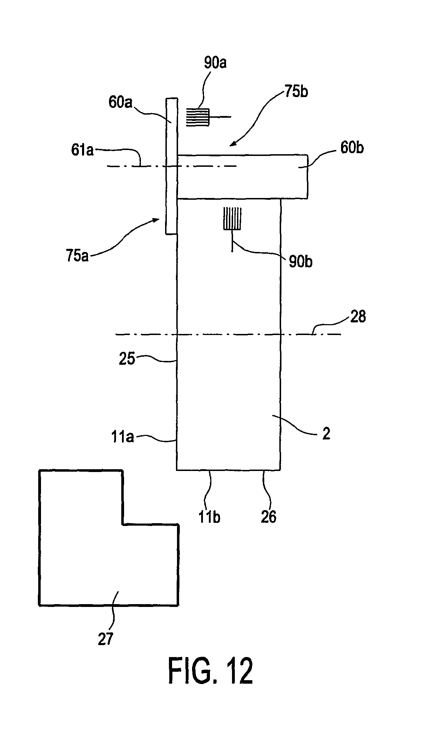

In the ELID-grinding machine 1 as shown in Figs. 1 and 2, a grinding tool having multiple grinding surfaces 11 may be arranged. An example of such a grinding tool is shown in Fig. 12.

The grinding tool 2 as shown in Fig. 12 is shaped as a disc having a circular circumference, and comprises two grinding surfaces 11a, 11b, extending substantially perpendicular with respect to each other. A first grinding surface 11a is an annular grinding surface on an end surface 25 of the grinding tool 2, whereas a second grinding surface 11b covers the curved surface 26 of the grinding tool 2.

Utilizing the grinding tool 2, it is possible to obtain a final product 27 having two optical surfaces extending substantially perpendicular with respect to each other, as shown in Fig. 12. Such a final product 27 may for example be a perpendicular mirror. According to an important aspect of the present invention, during the grinding process, two surfaces of an original product (not shown) are processed simultaneously. In the process, the grinding tool 2 rotates about a rotation axis 28, and the product moves with respect to the rotating grinding tool 2, such that both grinding surfaces 11a, 11 b are able to reach the product and to process the product simultaneously.

For the purpose of dressing the first grinding surface 11a, a first electrode 60a is positioned in the vicinity of the first grinding surface 11a, such that a relatively very small gap between the first electrode 60a and the first grinding surface 11 a exists, in other words, such that a first dressing area 75a where the dressing process can take place is present between the first electrode 60a and the first grinding surface 11a. For the purpose of dressing the second grinding surface 11b, a second electrode 60b is positioned in the vicinity of the second grinding surface 11b, such that a relatively very small gap between the second electrode 60b and the second grinding surface 11 b exists, in other words, such that a second dressing area 75b where the dressing process can take place is present between the second electrode 60b and the second grinding surface 11b. Both electrodes 60a, 60b are connected to a negative pole of a pulse generator (not shown in Fig. 12), whereas the grinding tool 2 is connected to a positive pole of the pulse generator. In order for the dressing process to take place, electrolyte is fed to the dressing areas 75a, 75b between the electrodes 60a, 60b and the respective grinding surfaces 11a, 11b by means of first feed means (not shown) and second feed means (not shown), respectively.

Both electrodes 60a, 60b are movable with respect to the dressing areas 75a, 75b, respectively. The first electrode 60a is shaped as a rotatable disc, which is rotatable about a rotation axis 61a. The shape of the second electrode 60b is comparable to the shape of the electrode 60 as shown in Fig. 11, and is arranged such as to perform the wobbling movement as described in relation to said electrode 60.

During an ELID-grinding process, the grinding tool 2 and the first electrode 60a rotate about the respective rotation axes 28, 61a, and the second electrode 60b performs a wobbling movement. During the process, electrolyte is fed to the dressing areas 75a, 75b between the electrodes 60a, 60b and the respective grinding surfaces 11a, 11b. Further, a potential difference is created between the grinding tool 2 on the one hand and the electrodes 60a, 60b on the other hand by means of a pulse generator (not shown in Fig. 12), so that an electric current is brought about between the electrodes 60a, 60b and the respective grinding surfaces 11a, 11b.

As a result of the flow of electric current and the flow of electrolyte between the electrodes 60a, 60b and the respective grinding surfaces 11 a, 11 b, both grinding surfaces 11a, 11b are dressed simultaneously. According to an important aspect of the present invention, both electrodes 60a, 60b move continuously with respect to the respective dressing areas 75a, 75b. As a result, contamination of the electrodes 60a, 60b does not take place and the dressing process is performed under constant optimal conditions.

In the shown example, brushes 90a, 90b are provided to brush portions of the electrodes 60a, 60b, respectively, in order to ensure that portions which take part in the dressing process are totally clean.

As the grinding surfaces 11a, 11 b are continuously dressed, the grinding process does not need to be interrupted. Consequently, both processed surfaces will not be damaged by marks caused by stops and start-ups of the grinding process. Further, as the dressing process always takes place under optimal conditions, the performance of the grinding surfaces 11a, 11b is constantly kept at a high level. As an additional result, the processing forces can be kept at a relatively low level, so that damage and sub-surface damage of the processed surfaces can be entirely avoided.

After completion of the grinding process, there is no need for a further treatment of the surfaces, as the above-described combination of a continuous grinding process and dressing process yields surfaces of an excellent quality. The quality may even be such that the final product may be utilized for optical purposes.

It is important that the shape of the electrodes 60a, 60b is such that the electrodes 60a, 60b are able to dress the grinding surfaces 11a, 11b properly. The grinding tool 2 may have any suitable shape, and may comprise more than two grinding surfaces 11. Generally, the number of electrodes 60a, 60b corresponds to the number of grinding surfaces 11, whereas the number and shape of the grinding surfaces 11 are dependent on the shape of the final product 27.

In fact, for the sole purpose of simultaneously dressing a plurality of grinding surfaces 11a, 11b, it is not necessary to utilize electrodes 60a, 60b which move with respect to the dressing areas 75a, 75b. However, when the electrodes 60a, 60b do not move, the electrodes 60a, 60b will quickly become contaminated, as a result of which the dressing process will quickly deteriorate. Therefore, utilization of moving electrodes 60a, 60b is preferred.

In respect of all shown combinations of electrodes 60, 60a, 60b and grinding surfaces 11, 11a, 11b, it is important that the electrode 60, 60a, 60b is arranged such as to follow the grinding surface 11, 11a, 11b in case of a displacement. In that way, the position of the electrode 60, 60a, 60b with respect to the grinding surface 11, 11a, 11b is maintained, and interruption of the dressing process as a result of an increased distance between the electrode 60, 60a, 60b and the grinding surface 11, 11 a, 11b is prohibited.

It will be clear to a person skilled in the art that the scope of the present invention is not limited to the examples discussed in the foregoing, but that several amendments and modifications thereof are possible without deviating from the scope of the present invention as defined in the attached claims.

It will be understood that several aspects of the present invention may be combined, although this is not explicitly disclosed. For example, in the case of two electrodes 60a, 60b being arranged to simultaneously dress two grinding surfaces 11a, 11b of one and the same grinding tool 2, both electrodes 60a, 60b may be provided with holes 62 for letting through the gas which is produced during the dressing process.

## Claims

1. Method for dressing a grinding surface (11, 11a, 11b) of a grinding tool (2, 3, 10), comprising the following steps:
- positioning at least a portion of an electrode (60, 60a, 60b) in the vicinity of at least a portion of the grinding surface (11, 11 a, 11b), such that a dressing area (75, 75a, 75b) is obtained in which a relatively small gap is present between the electrode and the grinding surface;
- feeding electrolyte to the dressing area (75,75a, 75b); and
- bringing about an electric current between the grinding surface and the electrode, via the electrolyte;
wherein the electrode is moved with respect to the dressing area; **characterized in that** the electrode performs a wobbling movement.

2. Dressing process according to claim 1, wherein the electrode is moved according to a combination of a curved reciprocating movement about an axis (16, 28) and a linear reciprocating movement in the direction of the same axis (16, 28).

3. Dressing process according to claim 1 or 2, wherein the electrode is rotated about a rotation axis (61,61a).

4. Dressing process according to any of claims 1-3, wherein at least one portion of the electrode is brushed, preferably by means of a brush (90a, 90b).

5. Dressing process according to any of claims 1-4, wherein a portion of the grinding surface, other than a portion being subjected to the dressing treatment, contacts a workpiece (40), and wherein the grinding surface and the workpiece (40) move with respect to each other, such that the workpiece (40) is subjected to a grinding treatment.

6. Grinding machine (1), especially for carrying out the process according to any of claims 1-5, comprising:
- a grinding tool (2, 3, 10) having at least one grinding surface (11, 11a, 11b);
- at least one electrode (60,60a, 60b), which is positioned in the vicinity of at least a portion of the grinding surface, such that a dressing area (75,75a, 75b) is obtained in which a relatively small gap is present between the electrode and the grinding surface;
- feed means (70) for feeding electrolyte to the dressing area (75,75a, 75b); and
- a generator (20) for generating an electric current between the grinding surface and the electrode, via the electrolyte ;
wherein the electrode is movable with respect to the dressing area; **characterized in that** the electrode is arranged such as to be able to perform a wobbling movement.

7. Grinding machine (1) according to claim 6, wherein the electrode is arranged such as to be able to simultaneously perform a curved reciprocating movement about an axis (16, 28) and a linear reciprocating movement in the direction of the same axis (16, 28).

8. Grinding machine (1) according to claim 6 or 7, wherein the electrode is disc-shaped, comprising a flat upper surface (65).

9. Grinding machine (1) according to any of claims 6-8, wherein the electrode is rotatable about a rotation axis (61, 61a).

10. Grinding machine (1) according to claim 6, wherein the electrode comprises a concave dressing surface (64).

11. Grinding machine (1) according to any of claims 6-10, comprising brushing means (90a, 90b) for brushing at least one portion of the electrode, wherein the brushing means (90a, 90b) are arranged outside the dressing area (75,75a, 75b).

12. Grinding machine (1) according to any of claims 6-11, wherein the electrode is provided with holes (62), and wherein one side of at least a portion of the holes (62) ends up in the dressing area (75,75a, 75b).

13. Grinding machine (1) according to claim 12, wherein the feed means (70) are arranged such as to feed electrolyte to the dressing area (75,75a, 75b) through the holes (62) in the electrode.

14. Process for dressing at least two grinding surfaces (11a, 11b) of one grinding tool (2) simultaneously, comprising the following steps:
- assigning at least a portion of an electrode (60a, 60b) to at least a portion of each grinding surface;
- positioning the electrodes (60a, 60b) in the vicinity of the respective grinding surfaces, such that dressing areas (75a, 75b) are obtained in which a relatively small gap is present between the electrodes (60a, 60b) and the respective grinding surfaces;
- feeding electrolyte to the dressing areas (75a, 75b); and
- bringing about an electric current between the grinding surfaces and the electrodes, via the electrolyte;
wherein at least one electrode is moved with respect to the respective dressing area; **characterized in that** the electrode performs a wobbling movement.

15. Dressing process according to claim 14, wherein the electrode is moved according to a combination of a curved reciprocating movement about a rotation axis (28) of the grinding tool (2) and a linear reciprocating movement in the direction of the same axis (28).

16. Dressing process according to claim 14, wherein an electrode is rotated about a rotation axis (61a).

17. Dressing process according to any of claims 14-16, wherein at least one portion of at least one electrode is brushed, preferably by means of a brush (90a, 90b).

18. Dressing process according to any of claims 14-17, wherein a portion of at least one grinding surface, other than a portion being subjected to the dressing treatment, contacts a workpiece (40), and wherein the grinding surface and the workpiece (40) move with respect to each other, such that the workpiece (40) is subjected to a grinding treatment.

19. Grinding machine (1), especially for carrying out the process according to any of claims 14-18, comprising:
- a grinding tool (2) having at least two grinding surfaces (11a, 11 b) ;
- at least two electrodes (60a, 60b), wherein each electrode (60a, 60b) is positioned in the vicinity of at least a portion of a different one of the grinding surfaces, such that dressing areas (75a, 75b) are obtained in which a relatively small gap is present between the electrodes and the respective grinding surfaces;
- feed means (70) for feeding electrolyte to the dressing areas; and
- a generator (20) for generating an electric current between the grinding surfaces and the electrodes, via the electrolyte;
wherein at least one electrode is movable with respect to the respective dressing area; **characterized in that** the electrode is arranged such as to be able to perform a wobbling movement.

20. Grinding machine (1) according to claim 19, wherein the electrode is arranged such as to be able to simultaneously perform a curved reciprocating movement about a rotation axis (28) of the grinding tool (2) and a linear reciprocating movement in the direction of the same axis (28).

21. Grinding machine (1) according to claim 19 or 20, wherein at least one electrode is disc-shaped, comprising a flat dressing surface.

22. Grinding machine (1) according to any of claims 19-21, wherein at least one electrode is rotatable about a rotation axis (61a).

23. Grinding machine (1) according to any of claims 19-22, wherein at least one electrode comprises a concave dressing surface.

24. Grinding machine (1) according to any of claims 19-23, comprising brushing means (90a, 90b) for brushing at least one portion of at least one electrode, wherein the brushing means (90a, 90b) are arranged outside the dressing area (75a, 75b).

## Patentansprüche

1. Verfahren zum Abrichten einer Schleiffläche (11, 11a, 11b) eines Schleifwerkzeugs (2, 3, 10), das die folgenden Schritte umfasst:
- Positionieren zumindest ein Teilstück einer Elektrode (60, 60a, 60b) in der Nähe von zumindest einem Teilstück der Schleiffläche (11, 11a, 11b) in der Weise, dass ein Abrichtbereich (75, 75a, 75b) erhalten wird, in dem ein verhältnismäßig schmaler Zwischenraum zwischen der Elektrode und der Schleiffläche vorhanden ist,
- Zuführen von Elektrolyt in den Abrichtbereich (75, 75a, 75b) und
- Hervorrufen eines elektrischen Stroms zwischen der Schleiffläche und der Elektrode über den Elektrolyten,
wobei die Elektrode in Bezug auf den Abrichtbereich bewegt wird, **dadurch gekennzeichnet, dass** die Elektrode eine Taumelbewegung ausführt.

2. Abrichtprozess nach Anspruch 1, bei dem die Elektrode gemäß einer Kombination aus einer bogenförmigen Hin- und Herbewegung um eine Achse (16, 28) und einer linearen Hin- und Herbewegung in der Richtung derselben Achse (16, 28) bewegt wird.

3. Abrichtprozess nach Anspruch 1 oder 2, bei dem die Elektrode um eine Drehachse (61, 61a) gedreht wird.

4. Abrichtprozess nach einem der Ansprüche 1 bis 3, bei dem zumindest ein Teilstück der Elektrode gebürstet wird, vorzugsweise mittels einer Bürste (90a, 90b).

5. Abrichtprozess nach einem der Ansprüche 1 bis 4, bei dem ein Teilstück der Schleiffläche, das von dem Teilstück, welches soeben der Abrichtbehandlung unterzogen wird, verschieden ist, ein Werkstück (40) berührt, und bei dem sich die Schleiffläche und das Werkstück (40) in Bezug aufeinander so bewegen, dass das Werkstück (40) einer Schleifbehandlung unterzogen wird.

6. Schleifmaschine (1), insbesondere zum Ausführen des Prozesses nach einem der Ansprüche 1 bis 5, die Folgendes umfasst:
- ein Schleifwerkzeug (2, 3, 10) mit mindestens einer Schleiffläche (11, 11a, 11b),
- mindestens eine Elektrode (60, 60a, 60b), die in der Nähe von zumindest einem Teilstück der Schleiffläche so positioniert ist, dass ein Abrichtbereich (75, 75a, 75b) erhalten wird, in dem ein verhältnismäßig schmaler Zwischenraum zwischen der Elektrode und der Schleiffläche vorhanden ist,
- Zuführungsmittel (70), um dem Abrichtbereich (75, 75a, 75b) Elektrolyt zuzuführen, und
- einen Generator (20), um über den Elektrolyten einen elektrischen Strom zwischen der Schleiffläche und der Elektrode hervorzurufen,
wobei die Elektrode in Bezug auf den Abrichtbereich beweglich ist, **dadurch gekennzeichnet, dass** die Elektrode so eingerichtet ist, dass sie imstande ist, eine Taumelbewegung auszuführen.

7. Schleifmaschine (1) nach Anspruch 6, bei der die Elektrode so eingerichtet ist, dass sie imstande ist, eine bogenförmige Hin- und Herbewegung um eine Achse (16, 28) und gleichzeitig eine lineare Hin- und Herbewegung in der Richtung derselben Achse (16, 28) auszuführen.

8. Schleifmaschine (1) nach Anspruch 6 oder 7, bei der die Elektrode scheibenförmig ist und eine ebene Oberseite (65) aufweist.

9. Schleifmaschine (1) nach einem der Ansprüche 6 bis 8, bei der die Elektrode um eine Drehachse (61, 61a) drehbar ist.

10. Schleifmaschine (1) nach Anspruch 6, bei der die Elektrode eine konkave Abrichtfläche (64) aufweist.

11. Schleifmaschine (1) nach einem der Ansprüche 6 bis 10, die Bürstmittel (90a, 90b) zum Bürsten von zumindest einem Teilstück der Elektrode umfasst, wobei die Bürstmittel (90a, 90b) außerhalb des Abrichtbereichs (75, 75a, 75b) angeordnet sind.

12. Schleifmaschine (1) nach einem der Ansprüche 6 bis 11, bei der die Elektrode mit Löchern (62) versehen ist und eine Seite zumindest eines Teils der Löcher (62) in dem Abrichtbereich (75, 75a, 75b) endet.

13. Schleifmaschine (1) nach Anspruch 12, bei der die Zuführungsmittel (70) so eingerichtet sind, dass sie dem Abrichtbereich (75, 75a, 75b) durch die Löcher (62) in der Elektrode Elektrolyt zuführen.

14. Verfahren zum gleichzeitigen Abrichten von mindestens zwei Schleifflächen (11a, 11b) eines Schleifwerkzeugs (2), das die folgenden Schritte umfasst:
- Zuordnen zumindest eines Teilstücks einer Elektrode (60a, 60b) zu mindestens einem Teilstück jeder Schleiffläche,
- Positionieren der Elektroden (60a, 60b) in der Nähe der zugehörigen Schleifflächen in der Weise, dass Abrichtbereiche (75a, 75b) erhalten werden, in denen ein verhältnismäßig schmaler Zwischenraum zwischen den Elektroden (60a, 60b) und den zugehörigen Schleifflächen vorhanden ist,
- Zuführen von Elektrolyt in die Abrichtbereiche (75a, 75b) und
- Hervorrufen eines elektrischen Stroms zwischen den Schleifflächen und den Elektroden über den Elektrolyten,
wobei mindestens eine Elektrode in Bezug auf den zugehörigen Abrichtbereich bewegt wird, **dadurch gekennzeichnet, dass** die Elektrode eine Taumelbewegung ausführt.

15. Abrichtprozess nach Anspruch 14, wobei die Elektrode gemäß einer Kombination aus einer bogenförmigen Hin- und Herbewegung um eine Drehachse (28) des Schleifwerkzeugs (2) und einer linearen Hin- und Herbewegung in der Richtung derselben Achse (28) bewegt wird.

16. Abrichtprozess nach Anspruch 14, bei dem eine Elektrode um eine Drehachse (61 a) gedreht wird.

17. Abrichtprozess nach einem der Ansprüche 14 bis 16, bei dem zumindest ein Teilstück mindestens einer Elektrode gebürstet wird, vorzugsweise mittels einer Bürste (90a, 90b).

18. Abrichtprozess nach einem der Ansprüche 14 bis 17, bei dem ein Teilstück von mindestens einer Schleiffläche, das von dem Teilstück, welches soeben dem Abrichten unterzogen wird, verschieden ist, ein Werkstück (40) berührt, und bei dem sich die Schleiffläche und das Werkstück (40) in Bezug aufeinander so bewegen, dass das Werkstück (40) einer Schleifbehandlung unterzogen wird.

19. Schleifmaschine (1), insbesondere zum Ausführen des Prozesses nach einem der Ansprüche 14 bis 18, die Folgendes umfasst:
- ein Schleifwerkzeug (2) mit mindestens zwei Schleifflächen (11a, 11b),
- mindestens zwei Elektroden (60a, 60b), wobei jede Elektrode (60a, 60b) in der Nähe von zumindest einem Teilstück einer anderen der Schleifflächen so positioniert ist, dass Abrichtbereiche (75a, 75b) erhalten werden, in denen ein verhältnismäßig schmaler Zwischenraum zwischen den Elektroden und den zugehörigen Schleifflächen vorhanden ist,
- Zuführungsmittel (70), um den Abrichtbereichen Elektrolyt zuzuführen, und
- einen Generator (20), um über den Elektrolyten einen elektrischen Strom zwischen den Schleifflächen und den Elektroden hervorzurufen,
wobei mindestens eine Elektrode in Bezug auf den zugehörigen Abrichtbereich beweglich ist, **dadurch gekennzeichnet, dass** die Elektrode so eingerichtet ist, dass sie imstande ist, eine Taumelbewegung auszuführen.

20. Schleifmaschine (1) nach Anspruch 19, bei welcher die Elektrode so eingerichtet ist, dass sie imstande ist, eine bogenförmige Hin- und Herbewegung um eine Drehachse (28) des Schleifwerkzeugs (2) und gleichzeitig eine lineare Hin- und Herbewegung in der Richtung derselben Achse (28) auszuführen.

21. Schleifmaschine (1) nach Anspruch 19 oder 20, bei welcher mindestens eine Elektrode scheibenförmig ist und eine ebene Abrichtfläche aufweist.

22. Schleifmaschine (1) nach einem der Ansprüche 19 bis 21, bei der mindestens eine Elektrode um eine Drehachse (61a) drehbar ist.

23. Schleifmaschine (1) nach einem der Ansprüche 19 bis 22, bei der mindestens eine Elektrode eine konkave Abrichtfläche aufweist.

24. Schleifmaschine (1) nach einem der Ansprüche 19 bis 23, die Bürstmittel (90a, 90b) zum Bürsten von zumindest einem Teilstück mindestens einer Elektrode umfasst, wobei die Bürstmittel (90a, 90b) außerhalb des Abrichtbereichs (75a, 75b) angeordnet sind.

## Revendications

1. Procédé pour dresser une surface de rectification (11, 11a, 11b) d'un outil de rectification (2, 3, 10) comprenant les étapes suivantes :
- le positionnement d'au moins une partie d'une électrode (60, 60a, 60b) au voisinage d'au moins une partie de la surface de rectification (11, 11a, 11b) de sorte qu'une zone de dressage (75, 75a, 75b) soit obtenue dans laquelle un jeu relativement étroit est présent entre l'électrode et la surface de rectification ;
- l'alimentation en électrolyte de la zone de dressage (75, 75a, 75b) ; et
- l'amenée d'un courant électrique entre la surface de rectification et l'électrode via l'électrolyte ;
dans lequel l'électrode se déplace par rapport à la zone de dressage ; **caractérisé en ce que** l'électrode exécute un mouvement oscillant.

2. Processus de dressage selon la revendication 1, dans lequel l'électrode se déplace selon une combinaison d'un mouvement courbe alternatif autour d'un axe (16, 28) et d'un mouvement linéaire alternatif dans la direction du même axe (16, 28).

3. Processus de dressage selon la revendication 1 ou 2, dans lequel l'électrode est en rotation autour d'un axe de rotation (61, 61a).

4. Processus de dressage selon l'une quelconque des revendications 1 à 3, dans lequel au moins une partie de l'électrode est brossée, de préférence au moyen d'une brosse (90a, 90b).

5. Processus de dressage selon l'une quelconque des revendications 1 à 4, dans lequel une partie de la surface de rectification, autre qu'une partie soumise au traitement de dressage, est en contact avec une pièce à usiner (40), et dans lequel la surface de rectification et la pièce à usiner (40) se déplacent l'une par rapport à l'autre, de sorte que la pièce à usiner (40) soit soumise à un traitement de rectification.

6. Rectifieuse (1) spécialement pour exécuter le processus selon l'une des revendications 1 à 5, comprenant :
- un outil de rectification (2, 3, 10) ayant au moins une surface de rectification (11, 11a, 11b);
- au moins une électrode (60, 60a, 60b) qui est positionnée au voisinage d'au moins une partie de la surface de rectification, de sorte qu'une zone de dressage (75, 75a, 75b) soit obtenue dans laquelle un jeu relativement étroit est présent entre l'électrode et la surface de rectification ;
- un moyen d'alimentation (70) pour alimenter en électrolyte la zone de dressage (75, 75a, 75b) ; et
- un générateur (20) pour générer un courant électrique entre la surface de rectification et l'électrode via l'électrolyte;
dans laquelle l'électrode est déplaçable par rapport à la zone de dressage ; **caractérisée en ce que** l'électrode est disposée de manière à être capable d'exécuter un mouvement oscillant.

7. Rectifieuse (1) selon la revendication 6, dans laquelle l'électrode est disposée de manière à être capable d'exécuter simultanément un mouvement alternatif courbe autour d'un axe (16, 28) et un mouvement linéaire dans la direction du même axe (16,28).

8. Rectifieuse (1) selon la revendication 6 ou 7, dans laquelle l'électrode est en forme de disque, comprenant une surface plate (65).

9. Rectifieuse (1) selon l'une quelconque des revendications 6 à 8, dans laquelle l'électrode peut tourner autour d'un axe de rotation (61, 61a).

10. Rectifieuse (1) selon la revendication 6, dans laquelle l'électrode comprend une surface de dressage concave (64).

11. Rectifieuse (1) selon l'une quelconque des revendications 6 à 10, comprenant un moyen de brossage (90, 90a) pour brosser au moins une partie de l'électrode, dans laquelle le moyen de brossage (90a, 90b) est disposé en dehors de la zone de dressage (75, 75a, 75b).

12. Rectifieuse (1) selon l'une quelconque des revendications 6 à 11, dans laquelle l'électrode est pourvue de trous (62), et dans laquelle un côté d'au moins une partie des trous (62) s'arrête dans la zone de dressage (75, 75a, 75b).

13. Rectifieuse (1) selon la revendication 12, dans laquelle le moyen d'alimentation (70) est disposé de manière à alimenter en électrolyte la zone de dressage (75, 75a, 75b) au travers des trous (62) dans l'électrode.

14. Processus pour dresser au moins deux surfaces de rectification (11a, 11b) d'un outil de rectification (2) simultanément, comprenant les étapes suivantes :
- l'affectation d'au moins une partie d'une électrode (60a, 60b) à au moins une partie de chaque surface de rectification ;
- le positionnement des électrodes (60a, 60b) au voisinage des surfaces de rectification respectives, de manière que des zones de dressage (75a, 75b) soient obtenues dans lesquelles un jeu relativement étroit est présent entre les électrodes (60a, 60b) et les surfaces de rectification respectives ;
- l'alimentation en électrolyte des zones de dressage (75a, 75b) et
- l'amenée d'un courant électrique entre les surfaces de rectification et les électrodes, via l'électrolyte ;
dans lequel au moins une électrode se déplace par rapport à la zone de dressage respective ; **caractérisé en ce que** l'électrode exécute un mouvement oscillant.

15. Processus de dressage selon la revendication 14, dans lequel l'électrode se déplace selon une combinaison d'un mouvement alternatif courbe autour d'un axe de rotation (28) de l'outil de rectification (2) et d'un mouvement alternatif linéaire dans la direction de ce même axe (28).

16. Processus de dressage selon la revendication 14, dans lequel une électrode est en rotation autour d'un axe de rotation (61a).

17. Processus de dressage selon l'une quelconque des revendications 14 à 16, dans lequel au moins une partie d'au moins une électrode est brossée, de préférence au moyen d'une brosse (90a, 90b).

18. Processus de dressage selon l'une quelconque des revendications 14 à 17, dans lequel une partie d'au moins une surface de rectification, autre que la partie soumise au traitement de dressage, est en contact avec une pièce à usiner (40), et dans lequel la surface de rectification et la pièce à usiner (40) se déplacent l'une par rapport à l'autre, de sorte que la pièce à usiner (40) soit soumise à un traitement de rectification.

19. Rectifieuse (1), spécialement pour exécuter le processus selon l'une quelconque des revendications 14 à 18, comprenant :
- un outil de rectification (2) ayant au moins deux surfaces de rectification (11a, 11b) ;
- au moins deux électrodes (60a, 60b), dans laquelle chaque électrode (60a, 60b) est positionnée au voisinage d'au moins une partie d'une surface différente parmi les surfaces de rectifications, de manière à ce que des zones de dressage (75a, 75b) soient obtenues dans lesquelles un relativement petit jeu est présent entre les électrodes et les surfaces de rectification respectives ;
- un moyen d'alimentation (70) pour alimenter en électrolyte les zones de dressage ; et
- un générateur (20) pour générer un courant électrique entre les surfaces de rectification et les électrodes, via l'électrolyte ;
dans laquelle au moins une électrode est déplaçable par rapport à la zone de dressage respective ; **caractérisée en ce que** l'électrode est disposée de manière à être capable d'exécuter un mouvement oscillant.

20. Rectifieuse (1) selon la revendication 19, dans laquelle l'électrode est disposée de manière à être capable d'exécuter simultanément un mouvement alternatif courbe autour d'un axe de rotation (28) de l'outil de rectification (2) et un mouvement alternatif linéaire dans la direction du même axe (28).

21. Rectifieuse (1) selon la revendication 19 ou 20, dans laquelle au moins une des électrodes est en forme de disque, comprenant une surface de dressage plate.

22. Rectifieuse (1) selon l'une quelconque des revendications 18 à 21, dans laquelle au moins une des électrodes peut tourner autour d'un axe de rotation (61a).

23. Rectifieuse (1) selon l'une quelconque des revendications 19 à 22, dans laquelle au moins une électrode comprend une surface de dressage concave.

24. Rectifieuse (1) selon l'une quelconque des revendications 19 à 23, comprenant un moyen de brossage (90a, 90b) pour brosser au moins une partie d'au moins une électrode, dans laquelle le moyen de brossage (90a, 90b) est disposé en dehors de la zone de dressage (75a, 75b).
